# EUROPÄISCHE PATENTSCHRIFT

(11) **EP 2 049 550 B1**
(45) Veröffentlichungstag und Bekanntmachung des Hinweises auf die Patenterteilung: **06.01.2010**
(21) Anmeldenummer: 07787520.1
(22) Anmeldetag: 13.07.2007
(51) Int. Cl.: C07F 1/00

(54) **VERFAHREN ZUR HERSTELLUNG KUPFERHALTIGER METALLORGANISCHER GERÜSTMATERIALIEN**
METHOD FOR PRODUCING COPPER-CONTAINING ORGANOMETALLIC FRAMEWORK MATERIAL
PROCÉDÉ DE PRÉPARATION DE MATÉRIAUX D'OSSATURE MÉTALLO-ORGANIQUES CONTENANT DU CUIVRE

(30) Priorität: 27.07.2006 EP 06117958
(43) Veröffentlichungstag der Anmeldung: 22.04.2009
(73) Patentinhaber: BASF SE, 67056 Ludwigshafen (DE)
(72) Erfinder: SCHUBERT, Markus, 67063 Ludwigshafen (DE); ÖZKIRIM, Faruk, 67063 Ludwigshafen (DE); KIENER, Christoph, 67256 Weisenheim am Sand (DE); MÜLLER, Ulrich, 67435 Neustadt (DE); TONIGOLD, Markus, 89134 Blaustein (DE)
(86) Internationale Anmeldenummer: PCT/EP2007/057252
(87) Internationale Veröffentlichungsnummer: WO 2008/012216

(56) Entgegenhaltungen:
- SEKI, K. ET AL: "Syntheses and Characterization of Microporous Coordination Polymers with Open Frameworks" JOURNAL OF PHYSICAL CHEMISTRY B , 106 (6), 1380 1385 CODEN: JPCBFK; ISSN: 1089-5647, 2002, XP002453683 in der Anmeldung erwähnt
- LIN, ZHI-DONG ET AL: "Diaquabis(propane-1,2-diamine-.kappa.2N,N ') copper (II) terephthalate dihydrate" ACTA CRYSTALLOGRAPHICA, SECTION E: STRUCTURE REPORTS ONLINE , E61(3), M590-M592 CODEN: ACSEBH; ISSN: 1600-5368 URL: HTTP://JOURNALS.IUCR.ORG/E/ISSUES/2005/03/ 00/CI6501/INDEX.HTML, 2005, XP002453684

## Beschreibung

Die vorliegende Erfindung betrifft Verfahren zur Herstellung eines porösen metallorganischen Gerüstmaterials enthaltend mindestens zwei organische Verbindungen, die koordinativ an Kupferionen gebunden sind.

Poröse metallorganische Gerüstmaterialien sind im Stand der Technik im Allgemeinen bekannt und werden für zahlreiche Anwendungen vorgeschlagen. Solche Anwendungen sind beispielsweise die Speicherung, Abtrennung oder kontrollierte Abgabe chemischer Stoffe, wie beispielsweise von Gasen, oder auf dem Gebiet der Katalyse. Hierbei spielt insbesondere die Porosität des metallorganischen Gerüstmaterials eine ausschlaggebende Rolle. Dabei ist es ebenso von Bedeutung, bei der Herstellung solcher metallorganischer Gerüstmaterialien Verfahren bereitzustellen, die es ermöglichen, Gerüstmaterialien mit hoher Reproduzierbarkeit im Hinblick auf ihre Eigenschaften, insbesondere ihrer spezifischen Oberfläche, bereitzustellen.

Typischerweise werden poröse metallorganische Gerüstmaterialien aus einem Metallion sowie einem mehrzähnigen Liganden gebildet, wodurch sich ein mehrdimensionales Gerüst aufbaut, das sich entweder als Polymer unendlich oder - je nach Wahl des Liganden - als Polyeder erstreckt.

Hierbei sind sowohl ein-, zwei- als auch dreidimensionale Gerüstmaterialien möglich.

Je nach Anwendung kann durch eine entsprechende Wahl des Liganden sowie des Metallions die Effizienz des porösen metallorganischen Gerüstmaterials optimiert werden.

Daher existieren in der Literatur zahlreiche Vorschläge, die eine Vielzahl von Liganden beziehungsweise Metallen beschreiben.

Eine interessante Gruppe poröser metallorganischer Gerüstmaterialien basiert auf Kupfer als Metallion, wobei als Ligand zwei organische Verbindungen verwendet werden. Hierbei ist die erste organische Verbindung typischerweise eine Dicarbonsäure, mit der das Kupfer ein zweidimensionales poröses metallorganisches Gerüstmaterial bilden kann. Durch Zusatz eines weiteren Liganden, der typischerweise Amin-basiert ist, kann erreicht werden, dass durch Koordination dieser zweiten Verbindung eine dreidimensionale Gerüststruktur dadurch ausgebildet wird, dass diese zweite Verbindung eine Verbrückung der vormals zweidimensionalen Schichten durch die Kupferkomplexierung erwirkt.

Ein Beispiel für ein solches System ist ein Kupferkomplex mit Terephthalsäure und Triethylendiamin.

Zur Herstellung dieser porösen metallorganischen Gerüstmaterialien wird von einer Kupferverbindung ausgegangen, die typischerweise Kupfersulfat-Pentahydrat ist. Darüber hinaus wird Terephthalsäure zugegeben, wobei in diesem Schritt die Umsetzung in Gegenwart von Ameisensäure stattfindet.

Hierbei soll die Ameisensäure dazu dienen, dass sich ein entsprechendes metallorganisches Gerüstmaterial bilden kann, das dann im zweiten Schritt mit Triethylendiamin in Kontakt gebracht wird, um das oben beschriebene poröse metallorganische Gerüstmaterial zu bilden.

Hierbei dient die Ameisensäure als eine Art Hilfsstoff zur Fällung, wobei diese jedoch im Stand der Technik in starkem Überschuss bezogen auf das eingesetzte Kupfer verwendet wird.

So beschreibt beispielsweise JP-A 2005/093181 die Herstellung von Cu-BDC-TEDA, wobei die Ameisensäure im 95-fachen Überschuss eingesetzt wird. Das so erhaltene Gerüstmaterial ist für die Speicherung von Gasen, insbesondere Wasserstoff, geeignet. In der JP-A 2005/093181 wird jedoch vorgeschlagen, anstelle des aromatischen Liganden Terephthalsäure heterocyclische Liganden basierend auf Tetrazin einzusetzen. Dadurch gelingt die Umsetzung mit Triethylendiamin ohne Verwendung von Ameisensäure. Diese wird nur für erforderlich erachtet, wenn kein heterocyclischer Ligand eingesetzt wird. Dies kann damit begründet werden, dass die Bildung eines ersten Komplexzwischenproduktes einfacher möglich ist, so dass die anschließende Umsetzung mit Triethylendiamin problemloser erfolgt, wie dies beispielsweise mit Hilfe von Terephthalsäure möglich wäre.

Die Herstellung von Cu-BDC-TEDA als poröses metallorganisches Gerüstmaterial wird auch von K. Seki et al., J. Phys. Chem. B 106 (2002), 1380-1385, beschrieben. Hierbei wird ein 43-facher Überschuss an Ameisensäure in Bezug auf Kupfer eingesetzt.

Schließlich beschreibt auch die JP-A 2004/305985 das oben beschriebene metallorganische Gerüstmaterial, wobei Ameisensäure hier in einem 7-fachen Überschuss eingesetzt wird. Das so erhaltene Material ist geeignet für die Flüssiggasspeicherung.

Obwohl zahlreiche Verfahren zur Herstellung der oben beschriebenen metallorganischen Gerüstmaterialien existieren, besteht weiterhin ein Bedarf an alternativen Verfahren, bei denen insbesondere ein Scale-Up möglich ist und die Verfahren geeignet sind, das gewünschte metallorganische Gerüstmaterial in reproduzierbarer Weise, insbesondere in Bezug auf dessen spezifische Oberfläche, bereitzustellen.

Eine Aufgabe der vorliegenden Erfindung liegt somit in der Bereitstellung eines solchen Verfahrens.

Diese Aufgabe wird gelöst durch ein Verfahren zur Herstellung eines porösen metallorganischen Gerüstmaterials enthaltend eine erste und mindestens eine zweite an mindestens ein Kupferion koordinativ gebundene, mindestens zweizähnige organische Verbindung die Schritte enthaltend
(a) Umsetzung eines Reaktionsgemisches in der Flüssigphase enthaltend mindestens eine Kupferverbindung und die erste mindestens zweizähnige organische Verbindung unter Ausbildung eines das mindestens eine Kupferion und die erste mindestens zweizähnige organische Verbindung enthaltenden Komplexzwischenproduktes, wobei sich die erste mindestens zweizähnige organische Verbindung von einer Dicarbonsäure ableitet und ein Grundgerüst aufweist, das ein Kohlenwasserstoff ist, und
(b) Umsetzung des Komplexzwischenproduktes mit der mindestens zweiten mindestens zweizähnigen organischen Verbindung, wobei die mindestens zweite mindestens zweizähnige organische Verbindung ein gegebenenfalls substituierter mono-, bi- oder polycyclischer gesättigter oder ungesättigter Kohlenwasserstoff ist, bei dem mindestens zwei Ring-Kohlenstoffatome durch Heteroatome ausgewählt aus der Gruppe bestehend aus N, O und S ersetzt sind,
wobei das Reaktionsgemisch in Schritt (a) weniger als den 3-fachen Überschuss an Ameisensäure bezogen auf das eingesetzte Kupfer der Kupferverbindung aufweist.

Überraschenderweise hat sich gezeigt, dass insbesondere durch einen verringerten Einsatz von Ameisensäure und ganz besonders durch Weglassen von Ameisensäure bei der Herstellung der oben beschriebenen metallorganischen Gerüstmaterialien dazu führt, dass diese Gerüstmaterialien mit hohen spezifischen Oberflächen erhalten werden und auch eine höhere Reproduzierbarkeit solcher Gerüstmaterialien erreicht werden kann. Das im Stand der Technik bestehende Vorurteil, dass die Gegenwart von Ameisensäure oder anderer Monocarbonsäuren erforderlich wäre, um in geeigneter Weise zu den oben beschriebenen porösen metallorganischen Gerüstmaterialien gelangen zu können, kann durch das vorliegende erfindungsgemäße Verfahren überwunden werden.

Das erfindungsgemäße Verfahren zur Herstellung eines porösen metallorganischen Gerüstmaterials enthaltend eine erste und mindestens eine zweite an mindestens ein Kupferion koordinativ gebundene, mindestens zweizähnige organische Verbindung enthält zumindest zwei Schritte.

In Schritt a) erfolgt die Umsetzung eines Reaktionsgemisches in der Flüssigphase, wobei das Reaktionsgemisch mindestens eine Kupferverbindung und die erste mindestens zweizähnige organische Verbindung enthält. Durch die Umsetzung bildet sich ein Komplexzwischenprodukt, welches das mindestens eine Kupferion und die erste mindestens zweizähnige organische Verbindung enthält.

Bei der eingesetzten Kupferverbindung handelt es sich um eine Kupfer(I)- oder Kupfer(II)-Verbindung. Vorzugsweise handelt es sich um eine Kupfer(II)-Verbindung. Hierbei ist besonders bevorzugt, wenn die Kupferverbindung in Form eines Salzes vorliegt. Insbesondere handelt es sich bei diesem Salz um ein anorganisches Kupfersalz.

Vorzugsweise ist die Kupfer(II)-Verbindung ausgewählt aus der Gruppe bestehend aus Kupfer(II)-Sulfat, -Bromid, -Chlorid, -Carbonat und deren Hydrate. Darüber hinaus kann ebenso Kupfer(II)-Nitrat oder dessen Hydrat eingesetzt werden.

Besonders bevorzugt ist Kupfer(II)-Sulfat sowie dessen Mono- beziehungsweise Pentahydrat.

Bevorzugte Kupfer(I)-Verbindungen sind ebenfalls diejenigen Verbindungen, welche für Kupfer(II) aufgeführt sind, also Sulfat, Bromid, Chlorid, Carbonat, Nitrat sowie deren Hydrate.

In Schritt a) des erfindungsgemäßen Verfahrens zur Herstellung eines porösen metallorganischen Gerüstmaterials wird im Gegensatz zum Stand der Technik weniger als der 3-fache Überschuss an Ameisensäure bezogen auf das eingesetzte Kupfer der Kupferverbindungen eingesetzt.

Unter dem Begriff "Überschuss" im Rahmen der vorliegenden Erfindung ist das Verhältnis der molaren Stoffmenge an Ameisensäure, Formiat oder der Summe der molaren Mengen an Ameisensäure und Formiat zur molaren Menge an Kupfer der Kupferverbindung dann zu verstehen, wenn dieses Verhältnis > 1 ist. Dementsprechend liegt ein Unterschuss vor, wenn der Quotient < 1 ist. Gemäß der vorliegenden Erfindung liegt ein Unterschuss somit dann vor, wenn der Wert für den Überschuss < 1 beträgt.

Im Rahmen der vorliegenden Erfindung muss der Überschuss weniger als das 3-fache an Ameisensäure bezogen auf das eingesetzte Kupfer der Kupferverbindungen betragen. Mehr bevorzugt beträgt der Überschuss weniger als das 2-fache. Weiter mehr bevorzugt liegt ein Unterschuss an Ameisensäure bezogen auf das eingesetzte Kupfer vor.

Weiter mehr bevorzugt wird in Schritt (a) in dem erfindungsgemäßen Verfahren zur Herstellung eines porösen metallorganischen Gerüstmaterials keine Ameisensäure eingesetzt.

Im Rahmen der vorliegenden Erfindung ist unter dem Begriff "keine Ameisensäure" zu verstehen, dass die molare Menge an Ameisensäure, Formiat oder der Summe der molaren Mengen an Ameisensäure und Formiat zur molaren Menge an Kupfer der Kupferverbindung einen Wert aufweist, der < 1000 ppm, vorzugsweise geringer als 10 ppm, weiter mehr bevorzugt geringer als 1 ppm beträgt.

Weiterhin ist im Rahmen der vorliegenden Erfindung bevorzugt, wenn der Anteil an Ameisensäure geringer als 2 Gew.-%, mehr bevorzugt geringer als 1 Gew.-%, weiter mehr bevorzugt geringer als 0,1 Gew.-% und insbesondere geringer als 0,01 Gew.-% jeweils bezogen auf das Gesamtgewicht des Reaktionsgemisches ist.

Insbesondere ist unter dem Begriff "keine Ameisensäure" zu verstehen, dass das Vorhandensein von Ameisensäure beziehungsweise Formiat durch zumindest eine prinzipiell geeignete Detektionsmethode nicht detektiert werden kann. Zur Detektion von Ameisensäure können verschiedene gängige Detektionsverfahren eingesetzt werden. Hierbei sei beispielsweise die UV-Spektroskopie, IR-Spektroskopie, Kernresonanzspektroskopie, Massenspektroskopie, die Flammenionisationsdetektion sowie weitere Methoden zu nennen.

Darüber hinaus ist weiter bevorzugt, dass in dem erfindungsgemäßen Verfahren zur Herstellung eines porösen metallorganischen Gerüstmaterials nicht nur die Ameisensäure beziehungsweise dessen Formiat oder beides nicht in den oben angegebenen Mengen vorhanden ist, sondern dass auch andere Monocarbonsäuren beziehungsweise deren Carboxylate oder beide in den für Ameisensäure angegebenen molaren Mengen vorhanden sind.

Beispielhaft seien als Monocarbonsäuren Benzoesäure, Essigsäure, Propionsäure, Buttersäure, Acrylsäure oder Methacrylsäure zu nennen.

In Schritt a) des erfindungsgemäßen Verfahrens zur Herstellung eines porösen metallorganischen Gerüstmaterials findet die Umsetzung in Gegenwart einer ersten mindestens zweizähnigen organischen Verbindung statt.

Hierbei leitet sich die erste mindestens zweizähnige organische Verbindung von einer Dicarbonsäure ab und weist ein Grundgerüst auf, das ein Kohlenwasserstoff ist.

Der Begriff "ableiten" bedeutet im Rahmen der vorliegenden Erfindung, dass die Dicarbonsäure im Gerüstmaterial in teilweise deprotonierter oder vollständig deprotonierter Form vorliegen kann. Weiterhin kann die Dicarbonsäure einen Substituenten oder unabhängig voneinander mehrere Substituenten enthalten. Beispiele für solche Substituenten sind -OH, -NH₂, -OCH₃, -CH₃, -NH(CH₃), -N(CH₃)₂, -CN sowie Halogenide. Darüber hinaus bedeutet der Begriff "ableiten" im Rahmen der vorliegenden Erfindung, dass die Dicarbonsäure auch in Form der entsprechenden Schwefelanaloga vorliegen kann. Schwefelanaloga sind die funktionellen Gruppen -C(=O)SH sowie dessen Tautomer und C(=S)SH, die anstelle einer oder mehrerer Carbonsäuregruppen eingesetzt werden können. Darüber hinaus bedeutet der Begriff "ableiten" im Rahmen der vorliegenden Erfindung, dass eine oder beide Carbonsäurefunktionen durch eine Sulfongruppe (-SO₃H) ersetzt sein können. Darüber hinaus kann ebenso zusätzlich zu den zwei Carbonsäurefunktionen eine Sulfonsäuregruppe treten.

Die Dicarbonsäure weist neben den oben erwähnten funktionellen Gruppen einen organischen Grundkörper beziehungsweise eine organische Verbindung auf, an die diese gebunden sind. Hierbei können die oben genannten funktionellen Gruppen grundsätzlich an jede geeignete organische Verbindung gebunden sein, solange gewährleistet ist, dass die diese funktionellen Gruppen aufweisende organische Verbindung zur Ausbildung der koordinativen Bindung zur Herstellung des Gerüstmaterials befähigt ist und einen Kohlenwasserstoff darstellt.

Bevorzugt leitet sich die erste organische Verbindung von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 18, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin, Pyren und Dihydropyren zu nennen.

Besonders bevorzugte Kohlenwasserstoffe sind Benzol, Naphthalin, Biphenyl, Pyren, Dihydropyren und Ethen.

Beispielsweise leitet sich die erste organische Verbindung von einer Dicarbonsäure ab, wie etwa Oxalsäure, Bernsteinsäure, Weinsäure, 1,4-Butandicarbonsäure, 1,4-Butendicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 1,3-Butadien-1,4-dicarbonsäure, 1,4-Benzoldicarbonsäure, 4,4'-Diaminphenylmethan-3,3'-dicarbonsäure, Perylen-3,9-dicarbonsäure, Perylendicarbonsäure, 3,5-Cyclohexadien-1,2-dicarbonsäure, Octadicarbonsäure, Pentan-3,3-dicarbonsäure, 4,4'-Diamino-1,1'-biphenyl-3,3'-dicarbonsäure, Benzidin-3,3'-dicarbonsäure, 1,1'-Dinaphthyldicarbonsäure, 1,4,5,6,7,7,-Hexachlor-5-norbornen-2,3-dicarbonsäure, Phenylindandicarbonsäure, 1,4-Cyclohexandicarbonsäure, Naphthalin-1,8-dicarbonsäure, Hydroxybenzophenondicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalindicarbonsäure, Anthracen-2,3-dicarbonsäure, 5-tert-Butyl-1,3-benzoldicarbonsäure, 4-Cyclohexen-1,2-dicarbonsäure, Tetradecandicarbonsäure, 1,7-Heptadecandicarbonsäure, 5-Hydroxy-1,3-Benzoldicarbonsäure, 2,5-Dihydroxybenzol-1,4-dicarbonsäure, 1-Nonen-6,9-dicarbonsäure, Eicosendicarbonsäure, 4,4'-Dihydroxydiphenylmethan-3,3'-dicarbonsäure, Cyclohexen-2,3-dicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, oder Campherdicarbonsäure,

Weiterhin mehr bevorzugt handelt es sich bei der ersten organischen Verbindung um eine der oben beispielhaft genannten Dicarbonsäure als solche.

Besonders bevorzugte Dicarbonsäuren sind Terephthalsäure, 1,4-Naphthalindicarbonsäure, 1,5-Naphthalindicarbonsäure, 2,6-Naphthalindicarbonsäure, 1,5'-Biphenyldicarbonsäure, 4,4'-Biphenyldicarbonsäure, Fumarsäure, Isophthalsäure. Ganz besonders bevorzugt sind Terephthalsäure und 2,6-Naphthalindicarbonsäure.

Durch die Umsetzung in Schritt (a) des erfindungsgemäßen Verfahrens zur Herstellung eines porösen metallorganischen Gerüstmaterials ergibt sich ein Komplexzwischenprodukt, das die erste mindestens zweizähnige organische Verbindung und das mindestens eine Kupferion enthält.

Nach erfolgter Herstellung liegt das im Allgemeinen kristalline poröse Komplexzwischenprodukt in Form der Primärkristalle in der Mutterlauge vor.

Nach erfolgter Herstellung des Komplexzwischenproduktes kann der Gerüstmaterial-Feststoff des Komplexzwischenproduktes von seiner Mutterlauge abgetrennt werden. Dieser Abtrennvorgang kann grundsätzlich gemäß sämtlicher geeigneter Verfahren erfolgen. Bevorzugt wird das Zwischenprodukt durch Fest-Flüssig-Trennung, Zentrifugation, Extraktion, Filtration, Membranfiltration, Querstrom-Filtration, Diafiltration, Ultrafiltration, Flokkulation unter Verwendung von Flokkulationshilfsmitteln wie beispielsweise nicht-ionische, kationische und/oder anionische Hilfsmittel, pH-Stift durch Zusatz von Additiven wie beispielsweise Salzen, Säuren oder Basen, Flotation, Sprühtrocknung, Sprühgranulation, oder Evaporation der Mutterlauge bei erhöhten Temperaturen und/oder im Vakuum und Aufkonzentration des Feststoffs abgetrennt.

Nach dem Abtrennen kann sich mindestens ein zusätzlicher Waschschritt, mindestens ein zusätzlicher Trocknungsschritt und/oder mindestens ein zusätzlicher Calcinierungsschritt anschließen.

Schließt sich im erfindungsgemäßen Verfahren in Schritt (a) mindestens ein Waschschritt an, so wird bevorzugt mit mindestens einem bei der Umsetzung in Schritt (a) verwendeten Lösungsmittel gewaschen.

Geeignete Lösemittel für Schritt (a) des erfindungsgemäßen Verfahrens sind beispielsweise N,N-Dimethylformamid (DMF), N,N-Diethylformamid (DEF) oder N,N-Dimethylacetamid (DMAc). Bevorzugt können diese auch als Gemisch mit Alkoholen, wie Methanol, Ethanol, n-Propanol, i-Propanol, Ketonen, wie Aceton, Methylethylketon oder Wasser eingesetzt werden.

Vorzugsweise wird dabei die erste mindestens zweizähnige organische Verbindung in DMF, DEF oder DMAc dem Reaktionsgemisch zugeführt und die Kupferverbindung mit dem Alkohol, Keton oder Wasser dem Reaktionsgemisch zugeführt, so dass die Flüssigphase die oben genannten Gemische aufweist.

Weiterhin bevorzugt sind Alkoholgemische; besonders bevorzugt ist das Gemisch DMF/Methanol.

Schließt sich im erfindungsgemäßen Verfahren in Schritt a), gegebenenfalls nach mindestens einem Waschschritt, mindestens ein Trocknungsschritt an, so wird der Gerüstmaterial-Feststoff bei Temperaturen im Allgemeinen im Bereich von 20 bis 200 °C, bevorzugt im Bereich von 25 bis 120 °C und besonders bevorzugt im Bereich von 56 bis 65 °C getrocknet.

Ebenfalls bevorzugt ist das Trocknen im Vakuum, wobei die Temperaturen im Allgemeinen so gewählt werden können, dass das mindestens eine Waschmittel zumindest teilweise, bevorzugt im Wesentlichen vollständig aus dem kristallinen porösen metallorganischen Gerüstmaterial entfernt wird und zugleich die Gerüststruktur nicht zerstört wird.

Beispielhafte Temperaturen liegen hierbei im Bereich von 40 °C bis 200 °C, vorzugsweise im Bereich von 50 °C bis 120 °C und insbesondere im Bereich von 20 °C bis 110 °C.

Die Trocknungszeit liegt im Allgemeinen im Bereich von 0,1 bis 15 h, bevorzugt im Bereich von 0,2 bis 5 h und insbesondere bevorzugt im Bereich von 0,5 bis 1 h.

An den gegebenenfalls mindestens einen Waschschritt und gegebenenfalls mindestens einen Trocknungsschritt kann sich in Schritt (a) mindestens ein Calcinierungsschritt anschließen, bei dem die Temperaturen bevorzugt so gewählt werden, dass die Struktur des Gerüstmaterials nicht zerstört wird.

Insbesondere durch Waschen und/oder Trocknen und/oder Calcinieren ist es beispielsweise möglich, mindestens eine Templatverbindung, die gegebenenfalls zur erfindungsgemäßen elektrochemischen Herstellung des Gerüstmaterials eingesetzt wurde, zumindest teilweise, bevorzugt im Wesentlichen quantitativ zu entfernen.

In Schritt (b) des erfindungsgemäßen Verfahrens wird wie oben ausgeführt entweder das nicht-isolierte Komplexzwischenprodukt mit einer zweiten organischen Verbindung umgesetzt oder das Zwischenprodukt abgetrennt und vorzugsweise in einem Lösemittel mit der zweiten organischen Verbindung umgesetzt. Diese Umsetzung wird typischerweise analog zu Schritt (a) durchgeführt. Dies gilt auch für eine nachfolgende Aufarbeitung.

Vorzugsweise wird das Komplexzwischenprodukt durch Abtrennung von der Mutterlauge erhalten und ohne weitere Aufarbeitung in Schritt (b) eingesetzt.

Vorzugsweise wird die Umsetzung in Schritt (b) in einem Lösemittel oder Lösemittelgemisch durchgeführt. Hierbei können flüssige Phasen verwendet werden, wie sie für Schritt (a) des erfindungsgemäßen Verfahrens verwendet werden können. Neben dem Komplexzwischenprodukt und der zweiten organischen Verbindung können weitere Additive bei der Umsetzung beteiligt sein.

Geeignete Lösemittel sind hierbei Alkohole wie Methanol, Ethanol, n-Propanol, i-Propanol oder Ketone wie Aceton, Methylethylketon. Bevorzugt ist Methanol.

Vorzugsweise gilt für Schritt (b) in Bezug auf Ameisensäure beziehungsweise Monocarbonsäure das für Schritt (a) ausgeführte.

In Schritt (b) des erfindungsgemäßen Verfahrens erfolgt die Umsetzung des Komplexzwischenproduktes mit der mindestens zweiten mindestens zweizähnigen organischen Verbindung, wobei die mindestens zweite mindestens zweizähnige organische Verbindung ein gegebenenfalls substituierter mono-, bi- oder polycyclischer gesättigter oder ungesättigter Kohlenwasserstoff ist, bei dem mindestens zwei Ring-Kohlenstoffatome durch Heteroatome ausgewählt aus der Gruppe bestehend aus N, O und S ersetzt sind.

Bevorzugt enthält die zweite organische Verbindung zumindest Stickstoff als Ringatom, mehr bevorzugt tritt als Heteroatom ausschließlich Stickstoff auf.

Der Kohlenwasserstoff kann unsubstituiert oder substituiert sein. Tritt mehr als ein Substituent auf, können die Substituenten gleich oder verschieden sein. Substituenten können unabhängig voneinander Phenyl, Amino, Hydroxy, Thio, Halogen, Pseudohalogen, Formyl, Amid, ein Acyl mit einem aliphatischen gesättigten oder ungesättigten Kohlenwasserstoffrest mit 1 bis 4 Kohlenstoffatomen und ein aliphatischer verzweigter oder unverzweigter gesättigter oder ungesättigter Kohlenwasserstoff mit 1 bis 4 Kohlenstoffatomen sein. Sofern die Substituenten ein oder mehrere Wasserstoffatome enthalten, kann jeder dieser unabhängig voneinander auch durch einen aliphatischen verzweigten oder unverzweigten gesättigten oder ungesättigten Kohlenwasserstoff mit 1 bis 4 Kohlenstoffatomen ersetzt sein.

Halogen kann sein Fluor, Chlor, Brom oder Iod. Pseudohalogen sind beispielsweise Cyano, Cyanato oder Isocyanato.

Ein aliphatischer verzweigter oder unverzweigter gesättigter oder ungesättigter Kohlenwasserstoff mit 1 bis 4 Kohlenstoffatomen ist beispielsweise Methyl, Ethyl, n-Propyl, i-Propyl, n-Butyl, i-Butyl, t-Butyl, Vinyl, Ethinyl oder Allyl.

Ein Acyl mit einem aliphatischen gesättigten oder ungesättigten Kohlenwasserstoffrest mit 1 bis 4 Kohlenstoffatomen ist beispielsweise Acetyl oder Ethylcarbonyl.

Vorzugsweise ist die zweite organische Verbindung unsubstituiert oder weist einen Substituenten auf, der Methyl oder Ethyl ist.

Vorzugsweise weist der mono-, bi- oder polycyclische Kohlenwasserstoff 5- oder 6-Ringe, weiter bevorzugt 6-Ringe auf.

Weiterhin ist bevorzugt, dass die mindestens zwei Heteroatome Stickstoff sind.

Weiterhin bevorzugt weist die zweite organische Verbindung genau zwei Heteroatome, vorzugsweise Stickstoff auf.

Für den Fall, dass der Kohlenwasserstoff einen 6-Ring aufweist, in dem zwei Heteroatome, vorzugsweise Stickstoff, vorhanden sind, stehen diese bevorzugt in para-Position zueinander.

Weiterhin ist bevorzugt, dass die zweite organische Verbindung aus einem ungesättigten Kohlenwasserstoff abgeleitet werden kann, der aromatisch oder vollständig gesättigt ist. Weist die zweite organische Verbindung mehr als einen Ring auf, ist bevorzugt mindestens ein Ring aromatisch.

Der monocyclische Kohlenwasserstoff, von dem sich die zweite organische Verbindung ableitet, ist beispielsweise Cyclobutan, Cyclobuten, Cyclobutadien, Cyclopentan, Cyclopenten, Cyclopentadien, Benzol, Cyclohexan oder Cyclohexen. Vorzugsweise ist der monocyclische Kohlenwasserstoff, von dem sich die zweite organische Verbindung ableitet, Benzol oder Cyclohexan.

Der bicyclische Kohlenwasserstoff, von dem sich die zweite organische Verbindung ableitet, kann beispielsweise aus zwei Ringen bestehen, die über eine kovalente Einfachbindung oder über eine Gruppe R miteinander verknüpft sind.

R kann sein -O-, -NH-, -S-, -OC(O)-, -NHC(O)-, -N=N-, oder ein aliphatischer verzweigter oder unverzweigter gesättigter oder ungesättigter Kohlenwasserstoff mit 1 bis 4 Kohlenstoffatomen, der mit einem oder unabhängig voneinander mit mehreren Atomen oder funktionellen Gruppen ausgewählt aus der Gruppe bestehend aus -O-, -NH-, -S-, - OC(O)-, -NHC(O)- und -N=N- unterbrochen sein kann.

Beispiele für einen bicyclischen Kohlenwasserstoff, von dem sich die erste organische Verbindung ableitet und aus zwei Ringen besteht, die über eine kovalente Einfachbindung oder über eine Gruppe R miteinander verknüpft sind, sind Biphenyl, Stilben, Biphenylether, N-Phenylbenzamid und Azobenzol. Bevorzugt ist Biphenyl.

Weiterhin kann es sich bei dem bicyclischen Kohlenwasserstoff, von dem sich die zweite Verbindung ableitet, um kondensierte Ringsysteme handeln.

Beispiele hierfür sind Decalin, Tetralin, Naphthalin, Inden, Indan, Pentalen. Bevorzugt sind Tetralin und Naphthalin.

Weiterhin kann der bicyclische Kohlenwasserstoff, von dem die zweite organische Verbindung ableitet, ein Brücken-Ringsystem aufweisen.

Beispiele hierfür sind Bicyclo[2.2.1]heptan oder Bicyclo[2.2.2]octan, wobei letzteres bevorzugt ist.

Ebenso kann der polycyclische Kohlenwasserstoff, von dem sich die erste organische Verbindung ableitet, kondensierte und/oder Brücken-Ringsysteme enthalten.

Beispiele hierfür sind Biphenylen, Indacen, Fluoren, Phenalen, Phenanthren, Anthracen, Naphtacen, Pyren, Crysen, Triphenylen, 1,4-Dihydro-1,4-Ethanonaphthalin und 9,10-Dihydro-9,10-Ethanoanthracen. Bevorzugt sind Pyren, 1,4-Dihydro-1,4-Ethanonaphthalin und 9,10-Dihydro-9,10 Ethanoanthracen.

Weist die zweite organische Verbindung mehr als einen Ring auf, können sich die mindestens zwei Heteroatome an einem Ring oder an mehreren Ringen befinden.

Besonders bevorzugt ist die zweite organische Verbindung ausgewählt aus der Gruppe bestehend aus 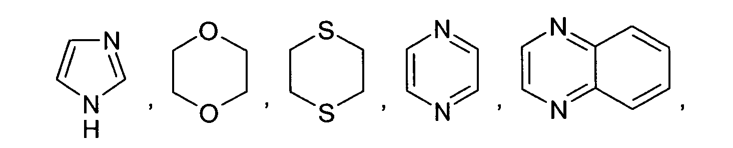 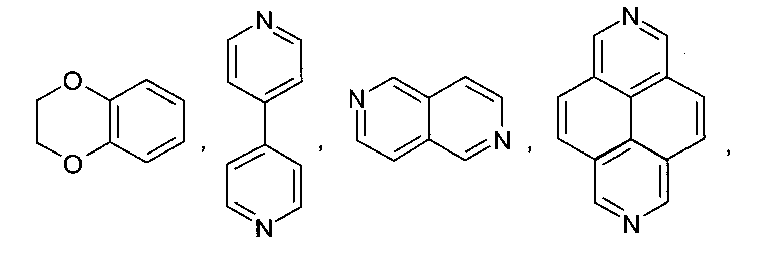 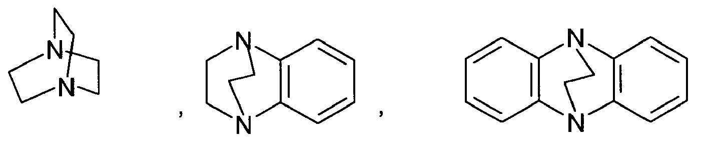 und substituierte Derivate davon.

Geeignete Substituenten sind die oben für die zweite organische Verbindung allgemein aufgeführten Substituenten. Besonders bevorzugte Substituenten sind Methyl und Ethyl. Insbesondere bevorzugt weisen die substituierten Derivate nur einen Substituenten auf. Ganz besonders bevorzugte substituierte Derivate sind 2-Methylimidazol und 2-Ethylimidazol.

Die Umsetzung in Schritt (a) und/oder (b) erfolgt vorzugsweise in einem Temperaturbereich von 50°C bis 160°C. Mehr bevorzugt erfolgt die Umsetzung in einem Temperaturbereich von 55 °C bis 135 °C, weiter mehr bevorzugt im Bereich von 60 °C bis 100 °C und insbesondere im Bereich von 60 °C bis 80 °C. Hierbei ist weiterhin vorteilhaft, wenn die Umsetzung in Schritt (a) unter Atmosphärendruck stattfindet.

Die Umsetzung in Schritt (a) und/oder (b) in dem erfindungsgemäßen Verfahren findet vorzugsweise bei Atmosphärendruck statt. Es ist also kein erhöhter Druck für die Durchführung der Reaktion erforderlich. Insbesondere ist es nicht erforderlich unter erhöhtem Druck zu arbeiten, um zu höheren spezifischen Oberflächen zu gelangen. Insbesondere ist es nicht erforderlich unter Solvothermalbedingungen zu arbeiten. Obwohl die Reaktion bei Atmosphärendruck durchgeführt wird, kann es apparativ bedingt zu leichten Über- oder Unterdrücken während der Umsetzung kommen. Unter dem Begriff "Atmosphärendruck" ist daher im Rahmen der vorliegenden Erfindung ein Druckbereich zu verstehen, der durch einen nach oben und unten um höchstens 250 mbar, vorzugsweise höchstens 200 mbar, abweichenden Atmosphärendruck definiert wird. Der tatsächliche Druck bei der Umsetzung liegt somit in dem oben angegebenen Bereich. Weiterhin bevorzugt ist der tatsächliche Druck gleich dem Atmosphärendruck.

### Beispiele

### Beispiel 1: Herstellung eines metallorganischen Gerüstmaterials aus Cu-BDC-TEDA

Eine Lösung aus 6,2 g CuSO₄*5(H₂O) in 100 ml Methanol wird zu einer Suspension aus 4,2 g Terephthalsäure (BDC) in 120 ml DMF in einem Glaskolben mit Rührer gegeben. Es findet spontan eine rasche Niederschlagsbildung statt. Die Lösung wird bei 65°C für 6 h nachgerührt. Anschließend wird der blaue Niederschlag abfiltriert und in einer Lösung von 1,4 g Triethylendiamin (TEDA) in 160 ml Methanol 16 h bei ca. 70°C unter Rückfluss gerührt.

Das Produkt wird wiederum abfiltriert und mehrfach mit Methanol gewaschen. Anschließend wird das Produkt 16 h bei 110°C im Vakuumtrockenschrank getrocknet. Es werden 5,7 g eines türkisfarbenen Cu-BDC-TEDA-MOFs erhalten. Die Oberfläche (N₂-Sorption nach Langmuir) beträgt 2063 m²/g.

### Beispiele 2 und 3: Reproduzierbarkeit der Synthese

Beispiel 1 wird zweimal wiederholt. In einem Fall wird das Triethylendiamin einer anderen Firma eingesetzt (Bsp. 1 und 2: Marke Alfa Aesar von Fa. Johnson Matthey, Bsp. 3: Fa. Aldrich).

Es werden Produkte mit einer Oberfläche von 2031 (Bsp. 2) beziehungsweise 1889 m²/g (Bsp. 3) erhalten. Die Synthese ist also prinzipiell bei Verwendung gleicher Einsatzstoffe sehr gut reproduzierbar. Bei Verwendung offenbar geringwertiger Einsatzstoffe können offenbar Abweichungen auftreten. Aber selbst hier werden noch sehr hohe Oberflächenwerte mit einer Abweichung geringer als 10% erreicht.

Die Färbung ist in allen Proben ähnlich (türkis).

### Vergleichsbeispiel 4: Herstellung eines Cu-BDC-TEDA-MOFs in Gegenwart einer großen Menge (8 wt%) HCOOH

Die Synthese wird wie in Beispiel 1 durchgeführt, jedoch werden zusammen mit dem DMF 12,8 ml Ameisensäure vorgelegt. Es werden 5,2 g eines Produkts erhalten, das eine Oberfläche von lediglich 621 m²/g aufweist.

### Vergleichsbeispiel 5: Herstellung eines Cu-BDC-TEDA-MOFs in Gegenwart einer geringen Menge (2 wt%) HCOOH

Die Synthese wird wie in Beispiel 1 durchgeführt, jedoch werden zusammen mit dem DMF 3,2 ml Ameisensäure vorgelegt. Es werden 1,2 g eines Produkts erhalten, das eine Oberfläche von lediglich 1329 m²/g aufweist.

### Vergleichsbeisgiel 6 - 10: Herstellung eines Cu-BDC-TEDA-MOFs in Gegenwart einer mittleren Menge (4 wt%) HCOOH

Die Synthese wird wie in Beispiel 1 durchgeführt, jedoch werden zusammen mit dem DMF 6,4 ml Ameisensäure vorgelegt. Dabei werden Produkte mit folgenden Oberflächenwerten erhalten:

| **Bsp-Nr.** | **N₂-Oberfläche (Langmuir)** |
|---|---|
| 6 | 1202 m²/g |
| 7 | 1777 m²/g |
| 8 | 1540 m²/g |
| 9 | 957 m²/g |
| 10 | 1475 m²/g |
| Mittelwert | 1390 m²/g |

Es ergibt sich ein Mittelwert von lediglich 1390 m²/g. Die Synthesen sind zudem deutlich schlechter reproduzierbar: Maximale Abweichung nach unten 31%. Die Standardabweichung beträgt 317 m²/g (23%). Auch die Färbungen der einzelnen Proben zeigen klar sichtbare Unterschiede und variieren zwischen mintgrün und türkis.

## Patentansprüche

1. Verfahren zur Herstellung eines porösen metallorganischen Gerüstmaterials enthaltend eine erste und mindestens eine zweite an mindestens ein Kupferion koordinativ gebundene, mindestens zweizähnige organische Verbindung die Schritte enthaltend
(a) Umsetzung eines Reaktionsgemisches in der Flüssigphase enthaltend mindestens eine Kupferverbindung und die erste mindestens zweizähnige organische Verbindung unter Ausbildung eines das mindestens eine Kupferion und die erste mindestens zweizähnige organische Verbindung enthaltenden Komplexzwischenproduktes, wobei sich die erste mindestens zweizähnige organische Verbindung von einer Dicarbonsäure ableitet und ein Grundgerüst aufweist, das ein Kohlenwasserstoff ist, und
(b) Umsetzung des Komplexzwischenproduktes mit der mindestens zweiten mindestens zweizähnigen organischen Verbindung, wobei die mindestens zweite mindestens zweizähnige organische Verbindung ein gegebenenfalls substituierter mono-, bi- oder polycyclischer gesättigter oder ungesättigter Kohlenwasserstoff ist, bei dem mindestens zwei Ring-Kohlenstoffatome durch Heteroatome ausgewählt aus der Gruppe bestehend aus N, O und S ersetzt sind,
**dadurch gekennzeichnet, dass** das Reaktionsgemisch in Schritt (a) weniger als den 3-fachen Überschuss an Ameisensäure bezogen auf das eingesetzte Kupfer der Kupferverbindung aufweist.

2. Verfahren nach Anspruch 1, **dadurch gekennzeichnet, dass** die Kupferverbindung ausgewählt ist aus der Gruppe der Kupfer (II)-Verbindungen bestehend aus Kupfer(II)-Sulfat, -Bromid, -Chlorid, -Carbonat und deren Hydrate.

3. Verfahren nach Anspruch 1 oder 2, **dadurch gekennzeichnet, dass** keine Ameisensäure eingesetzt wird.

4. Verfahren nach einem der Ansprüche 1 bis 3, **dadurch gekennzeichnet, dass** das Reaktionsgemisch in Schritt (a) weniger als den 3-fachen Überschuss an einer Monocarbonsäure bezogen auf das eingesetzte Kupfer der Kupferverbindung aufweist.

5. Verfahren nach einem der Ansprüche 1 bis 4, **dadurch gekennzeichnet, dass** keine Monocarbonsäure eingesetzt wird.

6. Verfahren nach einem der Ansprüche 1 bis 5, **dadurch gekennzeichnet, dass** der Kohlenwasserstoff ausgewählt ist aus der Gruppe bestehend aus Benzol, Naphthalin, Biphenyl, Pyren, Dihydropyren und Ethen.

7. Verfahren nach einem der Ansprüche 1 bis 6, **dadurch gekennzeichnet, dass** die mindestens zweite mindestens zweizähnige organische Verbindung ausgewählt ist aus der Gruppe bestehend aus 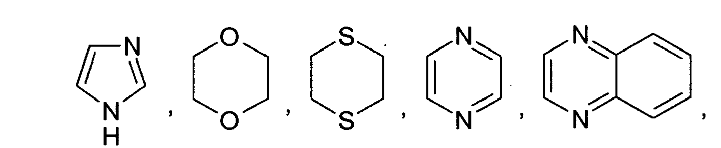 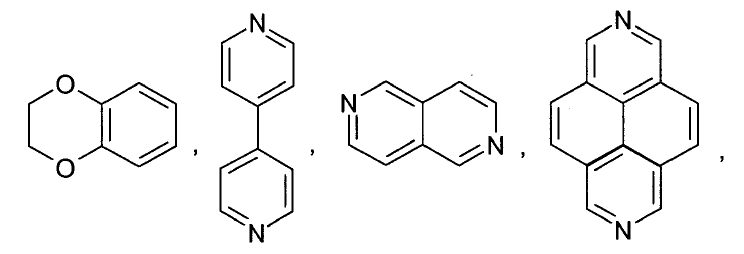 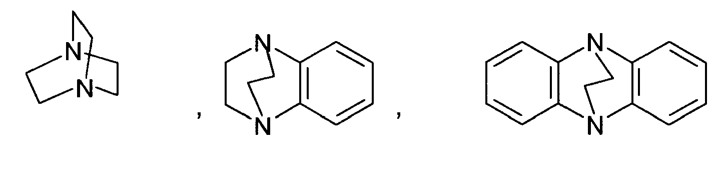 und substituierte Derivate davon.

8. Verfahren nach einem der Ansprüche 1 bis 7, **dadurch gekennzeichnet, dass** die Umsetzung in Schritt (a) in einem Temperaturbereich von 50°C bis 160°C durchgeführt wird.

9. Verfahren nach einem der Ansprüche 1 bis 8, **dadurch gekennzeichnet, dass** die Umsetzung in Schritt (a) unter Atmosphärendruck stattfindet.

10. Verfahren nach einem der Ansprüche 1 bis 9, **dadurch gekennzeichnet, dass** das Komplexzwischenprodukt durch Abtrennen von der Mutterlauge erhalten und ohne weitere Aufarbeitung in Schritt (b) eingesetzt wird.

## Claims

1. A process for preparing a porous metal organic framework comprising a first and at least one second at least bidentate organic compound coordinated to at least one copper ion, which comprises the steps
(a) reaction of a reaction mixture in the liquid phase comprising at least one copper compound and the first at least bidentate organic compound to form an intermediate complex comprising the at least one copper ion and the first at least bidentate organic compound, with the first at least bidentate organic compound being derived from a dicarboxylic acid and having a skeleton which is a hydrocarbon, and
(b) reaction of the intermediate complex with the at least second at least bidentate organic compound, with the at least second at least bidentate organic compound being an optionally substituted monocyclic, bicyclic or polycyclic saturated or unsaturated hydrocarbon in which at least two ring carbons have been replaced by heteroatoms selected from the group consisting of N, O and S,
wherein the reaction mixture in step (a) comprises less than a 3-fold excess of formic acid based on the copper of the copper compound used.

2. The process according to claim 1, wherein the copper compound is selected from the group of copper(II) compounds consisting of copper(II) sulfate, bromide, chloride, carbonate and hydrates thereof.

3. The process according to claim 1 or 2, wherein no formic acid is used.

4. The process according to any of claims 1 to 3,
wherein the reaction mixture in step (a) comprises less than a 3-fold excess of a monocarboxylic acid based on the copper of the copper compound used.

5. The process according to any of claims 1 to 4,
wherein no monocarboxylic acid is used.

6. The process according to any of claims 1 to 5,
wherein the hydrocarbon is selected from the group consisting of benzene, naphthalene, biphenyl, pyrene, dihydropyrene and ethene.

7. The process according to any of claims 1 to 6,
wherein the at least second at least bidentate organic compound is selected from the group consisting of 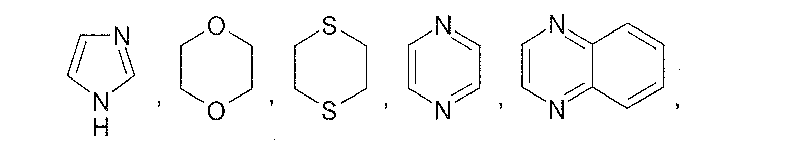 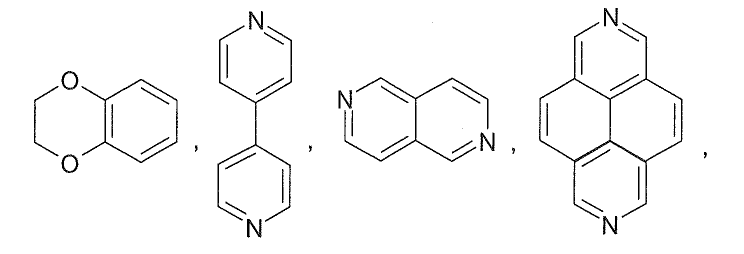 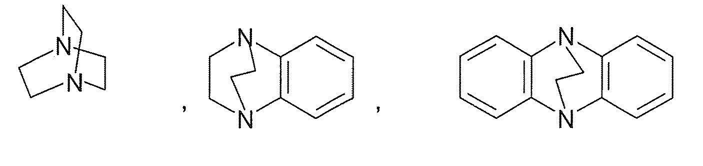 and substituted derivatives thereof.

8. The process according to any of claims 1 to 7,
wherein the reaction in step (a) is carried out in a temperature range from 50°C to 160°C.

9. The process according to any of claims 1 to 8,
wherein the reaction in step (a) takes place under atmospheric pressure.

10. The process according to any of claims 1 to 9,
wherein the intermediate complex is obtained by separating off the mother liquor and is used without further work-up in step (b).

## Revendications

1. Procédé de fabrication d'un matériau de squelette métallo-organique poreux contenant un premier et au moins un second composé organique au moins bidentate, reliés coordinativement à au moins un ion cuivre, contenant les étapes
(a) réaction d'un mélange réactionnel en phase liquide contenant au moins un composé de cuivre et le premier composé organique au moins bidentate pour former un produit intermédiaire complexe contenant le ou les ions cuivre et le premier composé organique au moins bidentate, le premier composé organique au moins bidentate dérivant d'un acide dicarboxylique et ayant un squelette de base qui est un hydrocarbure, et
(b) réaction du produit intermédiaire complexe avec le ou les seconds composés organiques au moins bidentates, le ou les seconds composés organiques au moins bidentates étant des hydrocarbures saturés ou insaturés, mono-, bi- ou polycycliques, éventuellement substitués, dont au moins deux atomes de carbone cycliques sont remplacés par des hétéroatomes choisis dans le groupe constitué de N, O et S,
**caractérisé en ce que** le mélange réactionnel comporte à l'étape (a) un excès en acide formique d'un facteur inférieur à 3 par rapport au cuivre utilisé du composé de cuivre.

2. Procédé selon la revendication 1, **caractérisé en ce que** le composé de cuivre est choisi dans le groupe des composés de cuivre (II) constitué du sulfate, du bromure, du chlorure, du carbonate de cuivre (II) et leurs hydrates.

3. Procédé selon la revendication 1 ou 2, **caractérisé en ce que** l'acide formique n'est pas utilisé.

4. Procédé selon l'une quelconque des revendications 1 à 3, **caractérisé en ce que** le mélange réactionnel comporte à l'étape (a) un excès en un acide monocarboxylique d'un facteur inférieur à 3 par rapport au cuivre utilisé du composé de cuivre.

5. Procédé selon l'une quelconque des revendications 1 à 4, **caractérisé en ce qu'**aucun acide monocarboxylique n'est utilisé.

6. Procédé selon l'une quelconque des revendications 1 à 5, **caractérisé en ce que** l'hydrocarbure est choisi dans le groupe constitué du benzène, de la naphtaline, du biphényle, du pyrène, du dihydropyrène et de l'éthène.

7. Procédé selon l'une quelconque des revendications 1 à 6, **caractérisé en ce que** le ou les seconds composés organiques au moins bidentates sont choisis dans le groupe constitué de 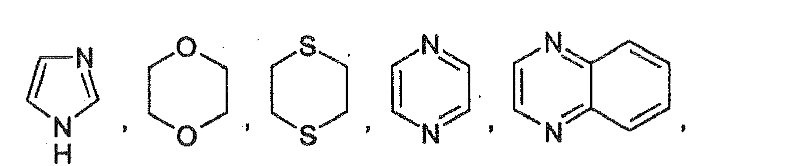 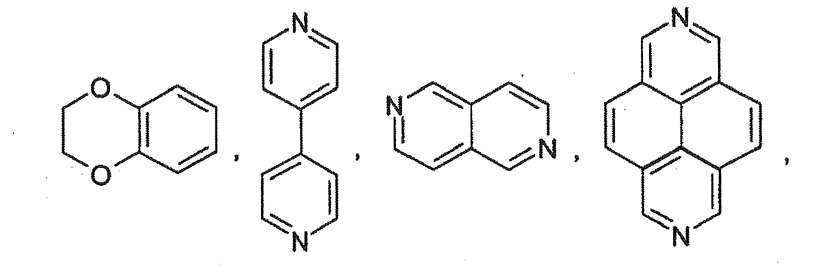 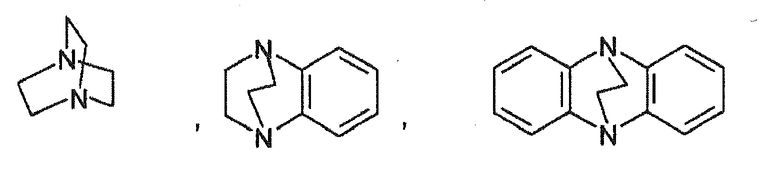 et leurs dérivés substitués.

8. Procédé selon l'une quelconque des revendications 1 à 7, **caractérisé en ce que** la réaction de l'étape (a) est réalisée dans une plage de températures de 50 °C à 160 °C.

9. Procédé selon l'une quelconque des revendications 1 à 8, **caractérisé en ce que** la réaction de l'étape (a) a lieu sous pression atmosphérique.

10. Procédé selon l'une quelconque des revendications 1 à 9, **caractérisé en ce que** le produit intermédiaire complexe est obtenu par séparation de la liqueur mère et utilisé à l'étape (b) sans traitement supplémentaire.
